# EUROPEAN PATENT SPECIFICATION

(11) **EP 0 366 899 B1**
(45) Date of publication and mention of the grant of the patent: **17.12.1997**
(21) Application number: 89116211.7
(22) Date of filing: 01.09.1989
(51) Int. Cl.: G06K 7/10

(54) **Retro-reflective laser diode scanner with beam position control**
Retroreflektierender Laserdiodenscanner mit Lageeinstellung des Abtaststrahls
Dispositif de balayage rétroréflectif à diode laser à commande de position du faisceau

(30) Priority: 31.10.1988 US 264693
(43) Date of publication of application: 09.05.1990
(60) Divisional application: 97109114.5
(73) Proprietor: SYMBOL TECHNOLOGIES, INC., Bohemia New York 11716-3300 (US)
(72) Inventor: Shepard, Howard M., Great River, NY 11739 (US); Barkan, Edward, South Setauket, NY 11720 (US)
(74) Representative: Wagner, Karl H., Dipl.-Ing.

(56) References cited:
- EP-A- 0 137 966
- US-A- 4 143 809
- US-A- 4 560 862
- US-A- 4 760 248

## Description

### BACKGROUND OF THE INVENTION

### 1. Field of the Invention

This invention generally relates to laser scanning systems for reading indicia having portions of different light reflectivity such as bar code symbols and, more particularly, to a lightweight, multi-component, portable laser diode scanning head supportable by a user and aimable at each symbol to be read. Still more particularly, this invention relates to adjustably positioning a laser beam to lie within a non-circular field of view in a high magnification, retro-reflective system.

### 2. Description of Related Art

Various optical readers and optical scanning systems have been developed heretofore to optically read bar code symbols printed on labels affixed to objects in order to identify the object by optically reading the symbol thereon. The bar code symbol itself is a coded pattern comprised of a series of bars of various widths, and spaced apart from one another to bound spaces of various widths, said bars and spaces having different light-reflecting characteristics. Such readers and systems electro-optically decoded the coded patterns to a multiple alpha-numerical digit representation descriptive of the object. Scanning systems of this general type, and components for use in such systems, have been disclosed, for example, in U.S. Pat. Nos. 4,251,798; 4,360,798; 4,369,361; 4,387,297; 4,593,186; 4,496,831; 4,409,470; 4,460,120; 4,607,156; 4,673,805; 4,736,095; 4,758,717 and 4,760,248, all of which have been assigned to the same assignee as the instant application and are referred to herein to show the state of the art.

As disclosed in some of the above patents, a particularly advantageous embodiment of such a scanning system resided, inter alia, in optically modifying and directing a laser light beam from a hand-held head which was supported by a user; aiming the head and, in some cases, the laser beam itself at a symbol to be read; repetitively scanning the laser beam and/or the field of view of a detector across the symbol; detecting the laser light reflected off the symbol during scanning; and decoding the detected reflected light.

With the advent of laser diodes which emit laser light at a wavelength of about 670 to about 680 nm, the emitted laser light is at least marginally visible to the human eye. By way of comparison, laser light at a wavelength of 670-680 nm is about one-tenth as visible to the human eye as red laser light emitted by a helium-neon gas laser at a wavelength of about 633 nm, but is more visible than infrared laser diode light whose wavelength is about 780 nm. Nevertheless, in use, at rapid scanning rates on the order of 40 scans per second and in well-lit environments such as a supermarket, the visibility of the laser light at the 670-680 nm wavelength suffers, particularly when far-out symbols located well away from the head are to be read.

The laser beam is optically modified and focused to form a beam spot having a minimum beam cross-section or waist at a reference plane. A symbol can be read at either side of the reference plane. For ease of description, a symbol located between the reference plane and the head is defined as a "close-in" symbol, whereas a symbol that is located on the other side of the reference plane away from the head is defined as a "far-out" symbol. The term "close-in" symbol is also intended to cover the situation where the symbol actually is contacted by the head, or where the reference plane is located immediately outside the head. The range between minimum and maximum distances at which the system can read a symbol is often defined as the "depth of field". The depth of field is, of course, different for symbols of different densities.

With these definitions in mind, one drawback associated with the use of a laser diode which emits light of at least marginal visibility is that one way of rendering the laser light more visible, particularly in connection with far-out symbols, is to increase the magnification of the optics used for modifying and forming the beam. However, as the magnification is increased, control over the position of the beam and the pointing angle of the beam worsens. The beam pointing angle and beam position must, of course, be controlled to have a working system, and particularly so in the case of a retro-reflective system.

US-A-4,760,248, against which claim 1 is delimited, discloses a portable laser diode scanning head. The head comprises an actuable laser light source, optic means, scanning means, sensor means, reflected light collector means, signal processing means and manually-actuable trigger means.

US-A-4,560,862 discloses a system for optical scanning over a large depth of field, incorporating an incandescent light source to illuminate and scan an object, symbol or code. The system includes a rotatable optical polygon having mirrors with different curvature to provide scanning in different focal planes in the field. An optical receiving system includes a relay lens, an aperture stop, a field stop and a photodetector, wherein the field and aperture stops are slits parallel to the axis of rotation of the optical polygon.

### SUMMARY OF THE INVENTION

It is a general object of this invention to overcome the aforementioned problems and drawbacks of known prior art laser scanning systems, and in particular to adjustably position a laser beam to lie within a non-circular field of view in a high magnification, retro-reflective system.

Another object of the scanning system disclosed herein is to provide a hand-held laser diode scanning head which is lightweight, compact, rugged, non-wrist-and-arm fatiguing, and capable of emitting a laser beam visible to the human eye, whereby the visible laser beam can be readily positioned on and across close-in and far-out symbols.

Still another object of the scanning system disclosed herein is to provide a laser diode scanning head capable of reading not only symbols in contact with the head, but also close-in and far-out symbols.

In accordance with the present invention a laser scanning system as set forth in claim 1 is provided. Preferred embodiments of the invention are disclosed in the dependent claims.

In keeping with these objects, and others which will become apparent hereinafter, a laser scanning system is disclosed for reading indicia having portions of different light reflectivity, e.g. a bar code symbol having alternating darker bars separated by lighter spaces of variable widths. The system includes a housing, and a light source means therein for generating an incident laser beam. Advantageously, the light source means comprises a semiconductor laser diode which emits laser light at a wavelength of about 670 to about 680 nm so that the emitted laser light is at least marginally visible to the human eye,as described in detail above.

Optic means are also provided in the housing, and are operative for optically forming and directing the incident laser beam along an optical path toward the symbol located within a range of working distances relative to the housing. Laser light is reflected off the symbol. At least a returning portion of the reflected light travels away from the symbol back toward the housing.

Scanning means, e.g. a scanning motor, having a reciprocally-oscillatable output shaft on which a reflecting surface such as a scanning mirror is mounted, are mounted in the head for scanning the symbol in a scan, and preferably at a plurality of sweeps per second across the symbol in a repetitive manner. The returning portion of the reflected laser light has a variable light intensity across the symbol during the scan which is due, in the case of a bar code symbol, to the different light-reflective characteristics of the bars and spaces which constitute the symbol.

The system also comprises sensor means, e.g. one or more photodiodes, for detecting the variable light intensity of the returning portion of the reflected laser light over a field of view, and for generating an electrical signal, typically an analog signal, indicative of the detected variable light intensity.

Signal processing means are provided for processing the analog electrical signal, and usually for processing the same to a digitized electrical signal which can be decoded to data descriptive of the symbol being scanned.

The scanning means is operative for scanning either the incident laser beam itself across the symbol, or the field of view of the sensor means, or both.

Decode/control electronic circuitry is sometimes, but not always, provided on-board the housing, but may also be located remotely therefrom. Such circuitry is operative for decoding the digitized signal to the aforementioned data, for determining a successful decoding of the symbol, and for terminating the reading of the symbol upon the determination of the successful decoding thereof. The reading is initiated by actuation of an actuator, typically a manually-actuatable trigger means provided on the housing, and operatively connected to, and operative for actuating, the light source means, the scanning means, the sensor means, the signal processing means, and the decode/control means. The trigger means is actuated once for each symbol, each symbol in its respective turn.

In a hand-held application, the housing, also called a laser scanning head, is supported by a user in his or her hand, is aimed at each symbol to be read and, once the symbol is located, the user actuates the trigger means to initiate the reading. The decode/ control means automatically alerts the user when the symbol has been read so that the user can turn his or her attention to the next symbol, and repeat the reading procedure.

A problem arises when the incident laser beam is only marginally visible to the user. If the user cannot readily see the laser beam itself, he or she does not know when the beam is positioned on the symbol, or whether the scanning laser beam is scanning over the entire length of the symbol.

Therefore, preferably, means are provided for increasing the visibility of the incident laser beam to an enhanced visibility. This feature enables the user to see and to position the visibility-enhanced laser beam on the symbol to be read over an extended range of working distances relative to the head. This range includes not only symbols contacting the head, but also close-in symbols located between the aforementioned reference plane and the head, and also far-out symbols located on the other side of the reference plane away from the head.

The optic means includes a focusing lens, and still another way of increasing the visibility of the marginally visible laser beam is to increase the magnification of the focusing lens. Whereas 20X - 25X magnification factors were commonly used in prior art designs, it is proposed to use much higher magnification factors on the order of 50X. As explained above, such high magnification results in a loss of control over the position of the beam and the beam pointing angle, particularly in the case of a retro-reflective system wherein the position and direction of the laser beam relative to the field of view is critical. Advantageously, means are provided for adjustably positioning the laser beam to lie within the field of view of the sensor means in such a retro-reflective, high magnification system.

The invention itself, both as to its construction and its method of operation, together with additional objects and advantages thereof, best will be understood from the following description of specific embodiments when read in connection with the accompanying drawings.

### BRIEF DESCRIPTION OF THE DRAWINGS

FIG. 1 is a front view of a laser scanning head according to this invention;
FIG. 2 is a vertical sectional view taken on line 2--2 of FIG. 1;
FIG. 3 is a plan sectional view taken on line 3--3 of FIG. 2;
FIG. 4 is a front perspective view of the head of FIG. 1 in use, and schematically connected to other components of a laser scanning system;
FIG. 5 is a perspective view depicting various cross-sections of the laser beam emitted by the head of FIG. 1;

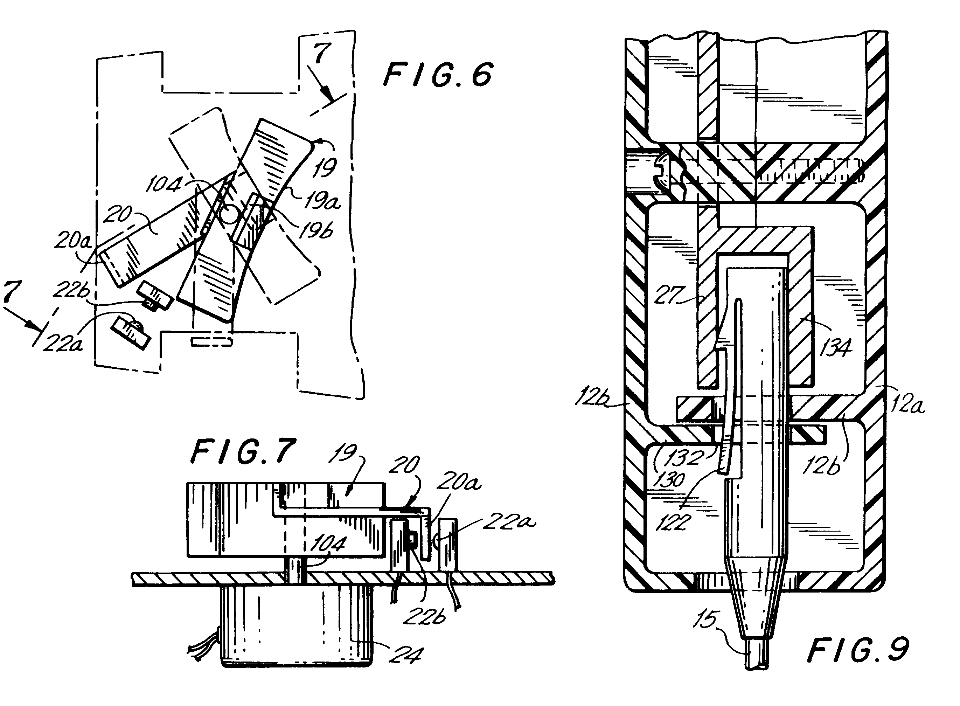

FIG. 6 is a top plan view of part of the optical assembly of FIG. 3;
FIG. 7 is a side view of the optical assembly of FIG. 6;
FIG. 8 is an enlarged sectional view of the optical assembly of FIG. 3; and
FIG. 9 is an enlarged sectional view taken on line 9--9 of FIG. 2.

### DETAILED DESCRIPTION OF THE PREFERRED EMBODIMENTS

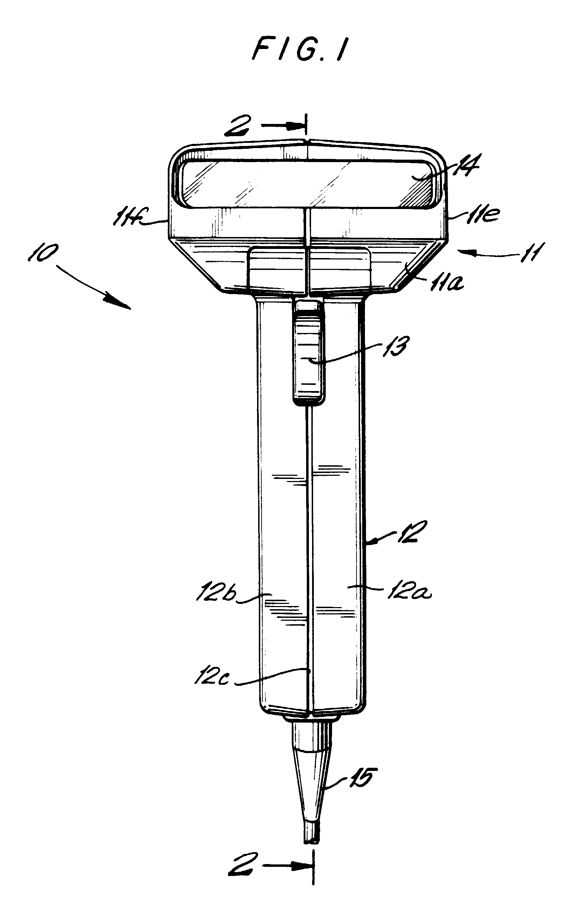

Referring now to FIGs. 1-4 of the drawings, reference numeral 10 generally identifies a lightweight (less than one pound), streamlined, hand-held, fully-portable, easy-to-manipulate, non-arm-and-wrist fatiguing laser scanning head supportable entirely by a user for use in a laser scanning system operative for reading, scanning and/or analyzing symbols, and aimable both prior to, and during, the reading thereof, by the user at the symbols, each symbol in its turn. The term "symbol", as used herein, is intended to cover indicia composed of different portions having different light-reflective properties at the wavelength of the light source, e.g. a laser, being utilized. The indicia may be the omnipresent Universal Product Code (UPC) symbol, or any of the black and white industrial symbols, e.g. Code 39, Codabar, Interleaved 2 of 5, etc. The indicia may also be any alphabetic and/or numeric characters. The term "symbol" is also intended to cover indicia located in a background field, wherein the indicia, or at least a portion thereof, have a different light-reflectivity property than that for the background field. In this latter definition, the "reading" of the symbol is of particular benefit in the fields of robotics and object recognition.

Turning now to FIG. 1, the head 10 includes a generally gun-shaped housing having a handle portion 12 of generally rectangular cross-section and generally elongated along a handle axis, and a generally horizontally-elongated barrel or body portion 11. The cross-sectional dimension and overall size of the handle portion 12 is such that the head 10 conveniently can fit and be held in a user's hand. The body and handle portions are constituted of a lightweight, resilient, shock-resistant, self-supporting material, such as a synthetic plastic material. The plastic housing preferably is injection-molded, but can be vacuum-formed or blow-molded to form a thin, hollow shell which bounds an interior space whose volume measures less than a value on the order of 50 cubic inches and, in some applications, the volume is on the order of 25 cubic inches or less. Such specific values are not intended to be self-limiting, but to provide a general approximation of the overall maximum size and volume of the head 10. The shell is formed of two housing parts 12a, 12b meeting along a generally vertical joining line 12c.

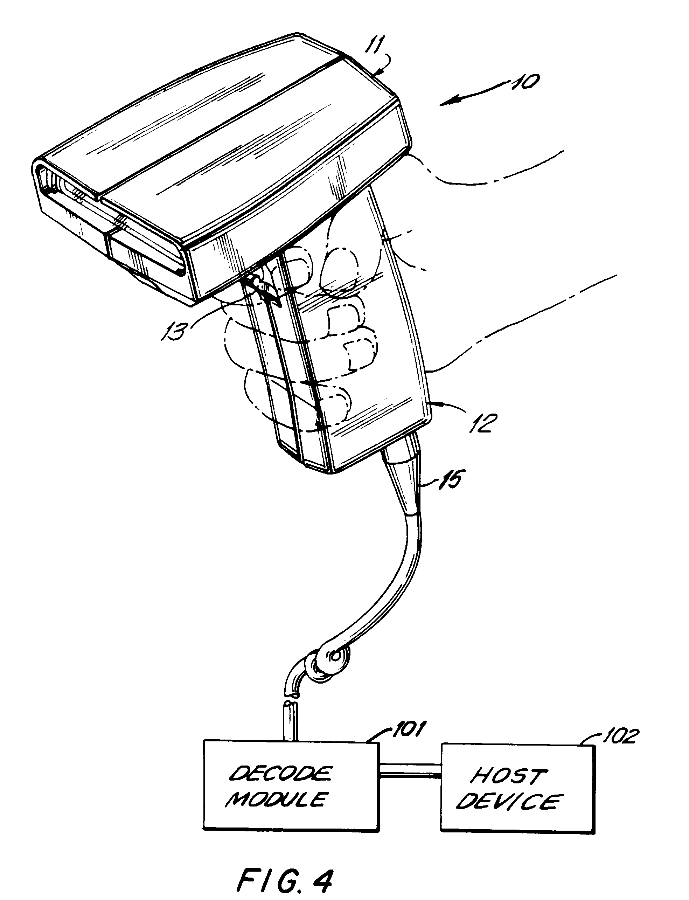

As considered in an intended position of use as shown in FIG. 4, the body portion 11 has a front prow region or nose having an inclined front wall 11a. The body portion 11 also has a rear region or stern having a rear wall 11b spaced rearwardly of the inclined front wall 11a. The body portion 11 also has a top wall 11c, a bottom wall 11d below the top wall 11c, and a pair of opposed side walls 11e, 11f between the top and bottom walls. The front wall lla is sloped relative to the top and bottom walls.

A manually-actuatable, and preferably depressible, trigger 13 is mounted on a cantilever resilient arm 13a for movement relative to the head in a forwardly-facing region where the handle and body portions meet and where the user's forefinger normally lies when the user grips the handle portion in the intended position of use. The bottom wall 11d has a lower opening, and the handle 12 has a forwardly-facing slot through which the trigger 13 projects and is moved. The arm 13a has one end overlying a trigger switch 25 which is switched from an open to a closed state upon depression of the trigger 13.

A window 14 is stationarily mounted at the nose and is light-transmissive to allow laser light to pass from the interior to the exterior of the head, and vice versa.

A flexible, non-bulky, coil-type electrical cable 15 with multiple freedoms of movement interconnects the head 10 to the remainder of the components of the laser scanning system, whose operation is explained in greater detail below.

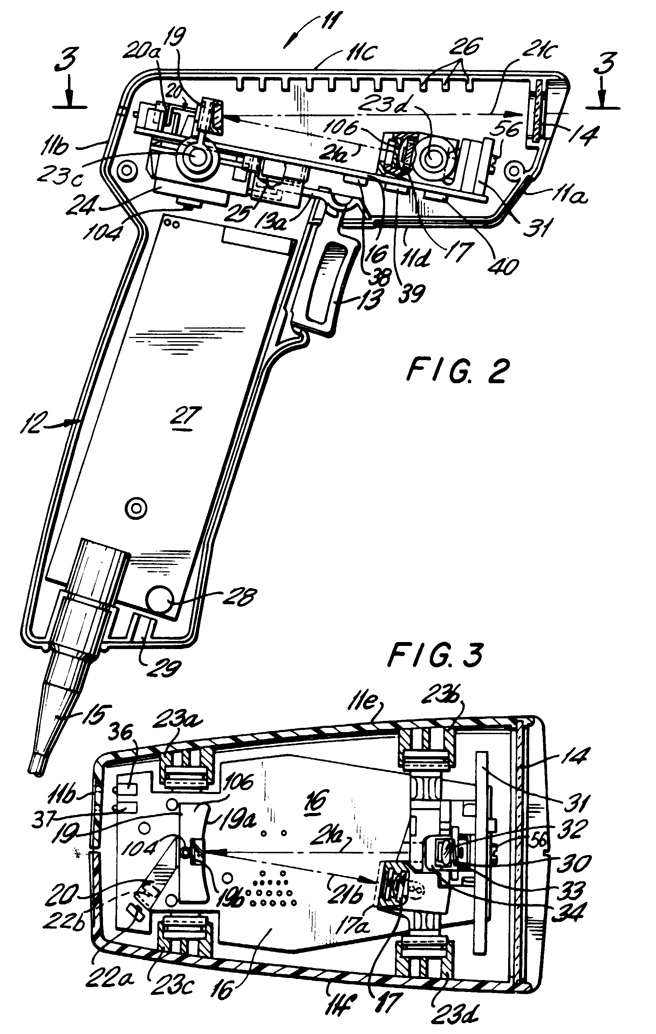

A plurality of components are mounted in the head and, as explained below, at least some of them are actuated by the trigger 13, either directly or indirectly, by means of a control microprocessor. One of the head components is an actuatable laser light source (see FIGs. 3 and 4), e.g. a semiconductor laser diode 33, operative, when actuated by the trigger 13, for propagating and generating an incident laser beam whose light, as explained above, is at least marginally visible to the human eye. The wavelength of the emitted beam is in the range from about 670 nm to about 680 nm. The emitted laser diode beam is highly divergent; diverges differently in different planes parallel and perpendicular to the longitudinal direction of beam propagation; is non-radially symmetrical, i.e. anamorphic; and has a beam cross-section resembling an oval. The diode may be of the continuous wave or pulse type. The diode requires a low voltage (e.g. 12 v DC or less) supplied by a power regulator and a battery (DC) source which may be provided within the head, or by a re-chargeable battery pack accessory detachably mounted on the head, or by a power conductor in the cable 15 connected to the head from an external power supply (e.g. DC source).

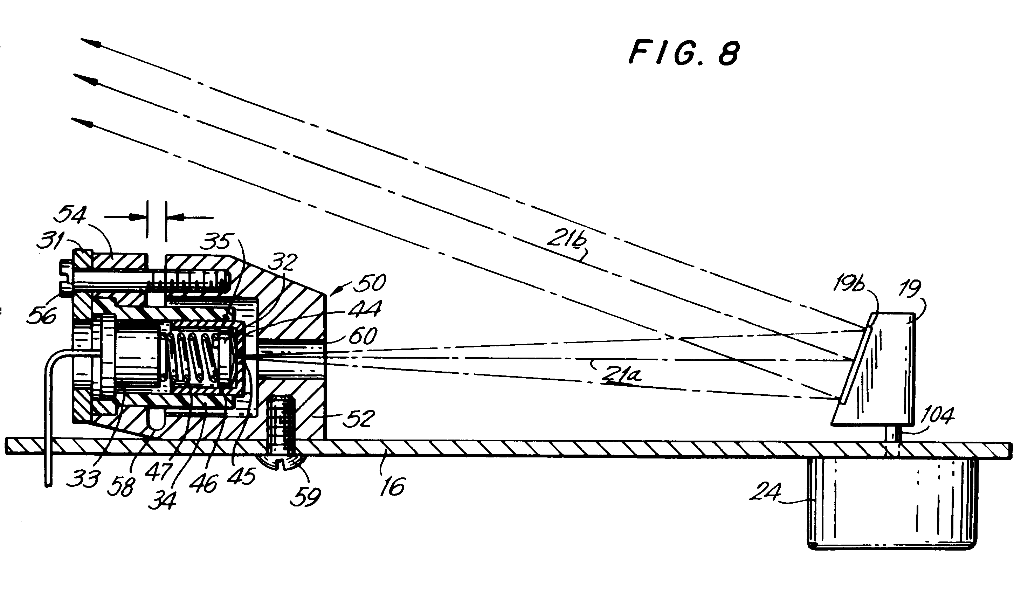

As best shown in FIG. 8, an optical assembly 30 is mounted in the head on a thin, flexible, printed circuit board 16 and adjustably positioned relative to the same for optically modifying and directing the emitted laser beam along a first optical path 21a, 21c toward a reference plane which is located exteriorly of the head, either at the nose for reading symbols in contact with the front wall 11a, or forwardly of the nose for reading symbols out of contact with the front wall 11a. The reference plane lies generally perpendicular to the longitudinal direction along which the emitted laser beam propagates. A symbol to be read is located in the vicinity of the reference plane, either at, or at one side, or at an opposite side, of the reference plane; that is, anywhere within the depth of field of the optically modified laser beam and within a range of working distances as measured relative to the head. The laser beam reflects off the symbol as a specular component in one direction and as a scattered component in many directions, and that portion of the scattered laser light which travels along a second optical path 21c and 21b away from the symbol back toward the head is known herein as the returning portion which, of course, also is at least marginally visible to the user.

As best shown in FIG. 8, the optical assembly includes an elongated, cylindrical optical tube 34 having at one end region a cylindrical bore in which an annular casing portion of the diode 33 is snugly received to hold the diode in a fixed position, and at the opposite end region of the optical tube 34 a lens barrel 35 is mounted for longitudinal movement. The lens barrel 35 includes an aperture stop 45,blocking wall portions 44 surrounding and bounding the aperture stop, and cylindrical side wall portions 46 which bound an interior space.

The optical assembly further includes a focusing lens 32, e.g. a plano-convex lens, located within the interior space of the side wall portions 46 in the first optical path, and operative (with the stop) for focusing the emitted laser beam at the reference plane. The aperture stop 45 may be located on either side of the lens 32, but preferably on the downstream side. A biasing means or tensioned coil spring 47 is located within the optical tube, and has one coil end bearing against a casing portion of the diode, and another coil end bearing against a planar side of the lens 32. The spring constantly urges the lens against the blocking wall portions, thereby fixedly locating the lens relative to the aperture stop. The lens and aperture stop are jointly moved when the lens barrel is longitudinally moved. The side wall portions are initially received in a threaded or sliding relationship witn an inner circumferential wall bounding the optical tube, and are thereupon fixed, e.g. by glueing or clamping, to the inner circumferential wall when a desired longitudinal spacing between the lens and the aperture stop on the one hand, and the diode on the other hand, has been obtained. The longitudinal movement between the side wall portions and the inner circumferential wall of the tube constitutes an adjustable positioning means for the lens and the aperture stop, and the fixing in position of the lens and the aperture stop relative to the diode constitutes a means for fixedly locating the lens and the aperture stop at a predetermined spacing from the diode.

The aperture stop has a cross-section which is, as explained below, about equal to the cross-section of the emitted laser beam at the aperture stop, thereby permitting a major portion of the emitted laser beam to pass through the aperture stop downstream along the first optical path en route to the symbol. The aperture stop cross-section is generally rectangular and, the longer dimension of the rectangular or oval cross-section is aligned with the larger divergence angle of the laser beam to transmit more energy to the symbol.

The optical assembly includes an optical block 50 having a front portion 52 and a rear portion 54 together bounding an interior in which the diode 33, optical tube 34, lens barrel 35 and the aforementioned components contained therein are received. A heat sink 31 is mounted in intimate thermal contact with the diode to conduct heat away from the same. An elevation adjustment means, including at least one threaded element 56, passes with clearance through aligned holes formed respectively in the heat sink and the rear portion 54, and is threaded into a threaded bore formed in the front portion 52. A hinge 58 is advantageously realized by providing a thin, flexible, weakened zone in the optical block between the front and rear portions thereof. The front portion 52 is stationarily mounted on the board 16 by anchors 59. The diode, tube, barrel and the components contained therein are mounted on the rear portion for movement therewith. Upon turning the element 56 in either circumferential direction about an axis along which the element 56 extends, the rear portion and all the components supported thereon will be angularly moved about the hinge 58 relative to the stationary front portion, thereby raising or lowering the emitted light beam which exits the block 50 through a clearance passage 60 which is dimensioned so as not to block the beam throughout its angular range of adjustment.

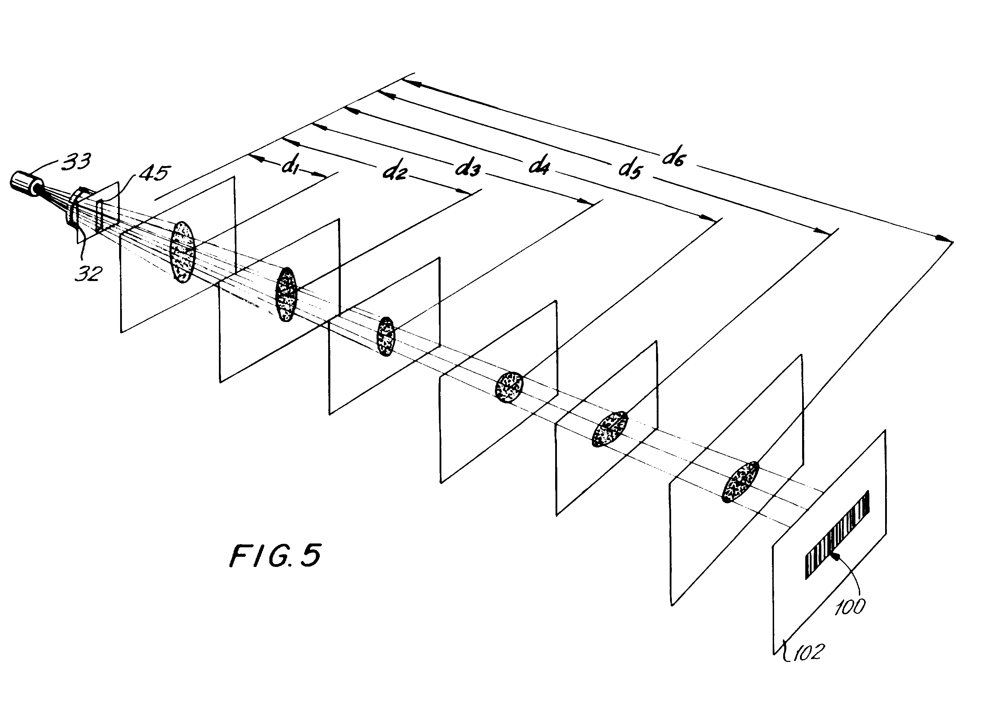

The laser beam that passes through the passage 60 is directed rearwardly by the optical assembly along path 21a within the head to a generally planar scanning mirror 19b for reflection therefrom. The scanning mirror 19b forwardly reflects the laser beam impinging thereon along path 21c through the forwardly-facing, laser-light-transmissive window 14 and to the symbol. As best shown in FIG. 5, a representative symbol 100 in the vicinity of the reference plane 102 is shown and, in the case of a bar code symbol, is comprised of a series of vertical bars spaced apart of one another along a longitudinal direction. A laser beam spot is focused on the symbol. When the scanning mirror is, as explained below, reciprocally and repetitively oscillated transversely to sweep the laser beam lengthwise across all the bars of the symbol, a linear scan is generated. The linear scan can be located anywhere along the height of the bars provided that all the bars are swept. The length of the linear scan is longer than the length of the longest symbol expected to be read and, in a preferred case, the linear scan is on the order of 3 inches (1 inch = 0,0254 m) at the reference plane.

The scanning mirror 19b is mounted on a scanning means, preferably a high-speed scanner motor 24 of the type shown and described in U.S. Pat. No. 4,387,397. For the purposes of this application, it is believed to be sufficient Lo point out that the scanner motor 24 has an output shaft 104 on which a support bracket 19 is fixedly mounted. The scanning mirror is fixedly mounted on the bracket. The motor is driven to reciprocally and repetitively oscillate the shaft in alternate circumferential directions over arc lengths of any desired size, typically less than 360°, and at a rate of speed on the order of a plurality of oscillations per second. In a preferred embodiment, the scanning mirror and the shaft jointly are oscillated so that the scanning mirror repetitively sweeps the laser diode beam impinging thereon through an angular distance or arc length at the reference plane of about 32° and at a rate of about 20 scans or 40 oscillations per second.

Referring again to FIG. 2, the returning portion of the scattered component of the reflected laser light has a variable light intensity, due to the different light-reflective properties of the various parts that comprise the symbol 100, over the symbol during the scan. The returning portion of the reflected laser light is collected by a generally concave, spherical collecting mirror 19a, and is a broad conical stream of light in a conical collecting volume centered on path 21c. The collecting mirror 19a reflects the collected conical light into the head along path 21b through a laser-light-transmissive element 106 to a sensor means, e.g. a photosensor 17. The photosensor 17, preferably a photodiode, detects the variable intensity of the collected laser light over a field of view which extends along, and preferably beyond, the linear scan, and generates an electrical analog signal indicative of the detected variable light intensity.

The photosensor "sees" a collection zone on the symbol. The aforementioned angular adjustment means ensures that the emitted laser beam impinges on the symbol at the collection zone when the laser spot impinges on the symbol.

The collecting mirror 19a is also mounted on the support bracket 19 and,when the scanning mirror is actuated by the trigger, the collecting mirror is reciprocally and repetitively oscillated transversely, sweeping the field of view of the photodiode lengthwise across the symbol in a linear scan.

The scanning mirror and the collecting mirror are, in a preferred embodiment, of one-piece construction, but the scanning mirror can also be a discrete, small, planar mirror attached by glue, or molded in place, at the correct position and angle on a discrete, front surfaced, silvered concave mirror. The concave collecting mirror serves to collect the returning portion of the laser light and to focus the same on the photodiode.

Also mounted in the head are various electrical subcircuits mounted on board 16. For example, signal processing means on board 16 are operative for processing the analog electrical signal generated by the sensor, and for generating a digitized video signal. Data descriptive of the symbol can be derived from the video signal. Suitable signal processing means for this purpose was described in U.S. Pat. No. 4,251,798. Component 39 on board 16 constitutes drive circuitry for the scanner motor, and suitable motor drive circuitry for this purpose was described in U.S. Pat. No. 4,387,297. Component 40 on board 16 is a voltage converter for converting the incoming voltage to one suitable for energizing the laser diode 33.

The digitized video signal is conducted, in one embodiment, along cable 15 to decode/control means 101 (see FIG. 4) operative for decoding the digitized video signal to a digitized decoded signal from which the desired data descriptive of the symbol is obtained, in accordance with an algorithm contained in a software control program. The decode/control means includes a PROM for holding the control program, a RAM for temporary data storage, and a control microprocessor for controlling the PROM and RAM. The decode/control means determines when a successful decoding of the symbol has been obtained, and also terminates the reading of the symbol upon the determination of the successful decoding thereof. The initiation of the reading is caused by depression of the trigger. The decode/control means also includes control circuitry for controlling the actuation of the actuatable components in the head, as initiated by the trigger, as well as for communicating with the user that the reading has been automatically terminated as, for example, by sending control signals to indicator lamps 36, 37 to illuminate the same.

The decoded signal is conducted to a remote, host computer 103 which serves essentially as a large data base, stores the decoded signal and, in some cases, provides information related to the decoded signal. For example, the host computer can provide retail price information corresponding to the objects identified by their decoded symbols.

In another embodiment, the decode/control means and a local data storage means are mounted on another printed circuit board 27 in the handle portion, and store multiple decoded signals which have been read. The stored decoded signals thereupon can be unloaded to a remote host computer. By providing the local data storage means, the use of the cable during the reading of the symbols can be eliminated -- a feature which is very desirable in making the head as freely manipulatable as possible. A beeper 28 is also optionally mounted on board 27 so that the user can hear through a port 29 in the handle when a symbol has been successfully read.

As previously noted, the light beam emitted by the diode 33 is marginally visible, and is of sufficient visibility to aim the beam at close-in symbols (including symbols contacting the head), but is less than ideal when the attempt is made to aim the beam at far-out symbols due, among other factors, to the increase in linear spot speed as one goes further out from the head. To increase the visibility of the light beam, the magnification of the focusing lens 32 is increased to factors in the order of 45X to 50X. By increasing the magnification of the lens 32, more power is transmitted to the scanning beam spot at the reference plane. Hence, the beam spot is brighter.

The assembly at the forward end of the board 16, including the optical block 50, the heat sink 31, the laser diode 33 and its associated optics, together with the photodetector 17, has a center of mass which approximately extends along an axis which is co-linear with an axis along which front shock mounts 23b, 23d extend (see FIG. 2). The assembly at the rear end of the board 16, including the scanning motor 24, the collecting and scanning mirrors on bracket 19, the arm 20, the diode 22a and receiver 22b also has a center of mass which approximately extends along an axis which is co-linear with an axis along which rear shock mounts 23a, 23c extend. By so positioning the heaviest components in the head, namely, the heat sink and the scanning motor, on, or close to, these shock mounting axes, the tendency of the heat sink and the scanning motor to turn around the shock mounting axes is minimized, thereby resisting the tendency of the head from twisting and the tendency of the optical and scanning assemblies from moving out of optical alignment in the event that the head is dropped. The board 16 has no support function, but serves as an alignment fixture.

The laser scanning head of FIG. 2 is of the retro-reflective type wherein the outgoing incident laser beam, as well as the field-of view of the sensor means, are scanned. It will be readily understood that other variants also are possible. For example, the outgoing incident laser beam can be directed to, and swept across, the symbol through one window on the head, while the field of view is not scanned and the returning laser light is collected through another window on the head. Also, the outgoing incident beam can be directed to, but not swept across, the symbol, while the field of view is scanned.

In order to minimize stray ambient light from reaching the photodetector 17, not only are light baffles 26 used, but the field of view of the photo-detector is also made quite small. However, the smaller the field of view, the more important it is to have fine control over the position and pointing angle of the laser beam in a retro-reflective head so that the laser beam can be positioned inside the field of view. As mentioned above, the high magnification of the focusing lens worsens control over the position and pointing angle of the outgoing laser beam.

The aforementioned angular adjustment means, including threaded element 56, is operative to position the laser beam inside the field of view. Since the adjustment is in the vertical (non-scan) direction, then the field of view is made elliptical with the longer axis extending along the scan direction. The elliptical field of view is chieved by positioning a rectangular (non-circular) aperture 17a in front of the photodetector 17.

The head herein need not be hand-held, but can be incorporated in a desk-top, stand-alone workstation in which the symbol is passed underneath an overhead window or port through which the outgoing beam is directed. Although the workstation itself is stationary during scanning, the symbol is movable relative to the workstation and must be registered with the outgoing beam and, for this purpose, the enhanced visibility laser beam described herein is advantageous. Also, the head may further include deactivation apparatus for changing the state of a surveillance device associated with a tag or label on which the symbol is provided, such as described in EP-A-0 355 355.

## Claims

1. A retro-reflective laser scanning system for reading indicia having portions of different light reflectivity, comprising:
(a) a laser diode (33) operative for emitting a laser beam, said laser beam having an anamorphic gaussian cross-section with a major axis and a minor axis;
(b) optic means for optically forming and directing the laser beam along an optical path (21a, 21c) to indicia (100), said optic means including a generally rectangular aperture stop (45) having a longer side aligned with the major axis of the laser beam to minimize clipping and power loss of the laser beam, and a high magnification lens (32) to focus the laser beam with a predetermined waiste size and with minimized power loss at a reference plane (102) in the vicinity of which the indicia (100) are located and impinged by the laser beam to thereby reflect reflected laser light off the indicia, at least a returning portion of the reflected laser light traveling away from the indicia back toward the system;
(c) scanning means (24, 104, 19, 19b) for scanning the indicia (100) in a scan across the same, said returning portion of the reflected laser light having a variable intensity over the scan;
(d) sensor means (17) for detecting the variable intensity of said returning portion of the reflected laser light over a field of view, and for generating an electrical signal indicative of the indicia being read;
(e) said scanning means being operative for scanning at least one of said laser beam and said field of view along a scan direction across the indicia (100),
characterized in that
(f) said laser diode is a diode which emits a laser beam at a wavelength which is at least marginally visible to the human eye
(g) said sensor means (17) has a generally rectangular detector aperture (17a) to minimize interference between ambient light and said returning portion of the reflected laser light, said detector aperture (17a) having its long side extending along the scan direction, thereby forming a generally non-circular field of view;
(h) an optical block (50) retaining at least said laser diode (33), said lens (32) and said aperture stop (45) is provided with an adjusting means (52, 54, 56, 58) suitable to adjust the angle under which the laser beam emerges from the optical block (50) thus allowing the adjustable positioning of the laser beam to lie within said non-circular field of view.

2. The system as recited in claim 1, wherein said adjusting means comprises at least one manually movable threaded element (56) passing with clearance through a diode heat sink (31) and a rear portion (54) of the optical block (50), and being threaded into a front portion (52) of the block (50), said block comprising a hinge (58) formed between said rear (54) and front (52) portions of the block (50), said rear portion (54) retaining at least said laser diode (33), said lens (32) and said aperture stop (45), and wherein said front portion (52) is fixedly attached to a ciruit board (16).

3. The system as recited in claim 1, wherein the system includes an elongated housing portion (11) having a front end (11a) region closer to, and a rear end region (llb) further from the indicia (100); and wherein the diode (33) is located at the front end region and emits the laser beam toward the rear end region; and wherein the scanning means includes a scanning mirror (19b) at the rear end region, thereby directing the laser beam to traverse approximately twice the length of the housing portion within the head.

4. The system as recited in claim 1, and further comprising a printed ciruit board (16) extending between the laser diode (33), the optic means, the scanning means and the sensor means, thus maintaining optical alignment between these parts.

## Patentansprüche

1. Rückreflektierendes Laserabtastsystem zum Lesen von Zeichen mit Teilen unterschiedlicher Lichtreflektivität, wobei folgendes vorgesehen ist:
(a) eine im Betriebszustand einen Laserstrahl reflektierende Laserdiode (33), wobei der Laserstrahl einen anamorphischen gausschen Querschnitt mit einer Haupt- und einer Nebenachse besitzt;
(b) optische Mittel zum optischen Formen und Leiten des Laserstrahls entlang eines optischen Pfades (21a, 21c) zu den Zeichen (100), wobei die Optikmittel eine im ganzen rechteckige Aperaturblende (45) aufweisen, und zwar mit einer Längsseite ausgerichtet mit der Hauptachse des Laserstrahls, um ein Abschneiden und Leistungsverlust des Laserstrahls zu minimieren, und mit einer eine hoche Vergrößerung vorsehenden Linse (32), um den Laserstrahl mit einer vorbestimmten Tailliengröße zu fokussieren und mit einem minimierten Leistungsverlust an einer Bezugsebene (102), in der Nähe von welcher die Zeichen (100) angeordnet sind und auf die der Laserstrahl auftrifft, um dadurch reflektiertes Laserlicht von den Zeichen wegzureflektieren, wobei mindestens ein rückkehrender Teil des reflektierten Laserlichts von den Zeichen weg zurück zum System läuft;
(c) Abtastmittel (24, 104, 19, 19b) zum Abtasten der Zeichen (100) in einer Abtastung über diesselben hinweg, wobei der Rückkehrteil des reflektierten Laserlichts eine variable Intensität über die Abtastung hinweg aufweist;
(d) Sensormittel (17) zum Detektieren der variablen Intensität des zurückkehrenden Teils des reflektierten Laserlichts über ein Gesichtsfeld und zur Erzeugung eines elektrischen Signals, welches eine Anzeige für die Zeichen bildet, die gelesen werden;
(e) wobei die Abtastmittel im Betrieb mindestens den Laserstrahl und/oder das Gesichtsfeld entlang einer Abtastrichtung über die Zeichen (100) abtasten,
dadurch gekennzeichnet, daß
(f) die Laserdiode eine Diode ist, die einen Laserstrahl mit einer Wellenlänge imitiert, der mindestens etwas für das menschliche Auge sichtbar ist;
(g) die Sensormittel (17) eine im ganzen rechteckige Detektorapertur (17a) aufweisen, um die Interferenz zwischen Umgebungslicht und dem erwähnten zurückkehrenden Teil des reflektierten Laserlichts zum minimieren, wobei die Detektorapertur (17a) ihre Längsseite sich entlang der Abtastrichtung erstreckend aufweist, wodurch ein im ganzen nicht zirkuläres oder nicht kreisförmiges Gesichtsfeld gebildet wird;
(h) ein optischer Block (50), der mindestens die Laserdiode (33), die Linse (32) und die Aperturblende (45) aufweist, mit einem Einstellmittel (52, 54, 56, 58) versehen ist und zwar geeignet zur Einstellung des Winkels unter dem der Laserstrahl aus dem optischen Block (50) austritt, wodurch gestattet wird, daß die einstellbare Positionierung des Laserstrahls innerhalb des nicht kreisförmigen Gesichtsfeldes liegt.

2. System nach Anspruch 1, wobei die Einstellmittel mindestens ein manuell bewegliches mit Gewinde versehenes Element (56) aufweisen, welches mit Zwischenraum durch eine Diodenwärmeableiter (31) und einen Rückteil (54) des optischen Blocks (50) läuft und in den Vorderteil (52) des Blocks (50) eingeschraubt ist, wobei der Block zwischen den erwähnten hinteren (54) und vorderen (52) Teilen des Blocks (50) Angel- oder Gelenkmittel (58) aufweist, wobei der hintere Teil (54) mindestens die Laserdiode (33), die Linse (32) und die erwähnte Aperturblende (45) enthält, und wobei der erwähnte Vorderteil (52) fest an einer Schaltungsplatte (16) angebracht ist.

3. System nach Anspruch 1, wobei das System einen langgestreckten Gehäuseteil (11) aufweist, und zwar mit einer vorderen Endregion (lla) dichter zu den Anzeigemitteln (100) und einer hinteren Endregion (llb) weiter weg von den Anzeigemitteln (100); und wobei die Diode (33) an der vorderen Endregion angeordnet ist und den Laserstrahl zu der hinteren Endregion hin emitiert; und wobei die Abtastmittel einen Abtastspiegel (19b) an der hinteren Endregion aufweisen, wodurch der Laserstrahl zum Überqueren von annähernd der doppelten Länge des Gehäuseteils innerhalb des Kopfes geleitet wird.

4. System nach Anspruch 1, welches ferner eine gedruckte Schaltungsplatte (16) aufweist, die sich zwischen der Laserdiode (33), den Optikmitteln, den Abtastmitteln und den Sensormitteln erstreckt und auf diese Weise die optische Ausrichtung zwischen diesen Teilen aufrecht erhält.

## Revendications

1. Système de balayage laser rétroréfléchi (100) destiné à lire des signes comportant des parties ayant une réflectivité de la lumière différente, comportant :
(a) une diode laser (33) fonctionnant de façon à émettre un faisceau laser, ledit faisceau laser ayant une section transversale anamorphotique gaussienne avec un grand axe et un petit axe ;
(b) des moyens optiques destinés à former et diriger optiquement le faisceau laser suivant un chemin optique (21a, 21c) vers des signes (100), lesdits moyens optiques comprenant un diaphragme à ouverture globalement rectangulaire (45) ayant un grand côté aligné avec le grand axe du faisceau laser pour minimiser l'écrêtage et la perte de puissance du faisceau laser, et une lentille (32) à fort grossissement pour focaliser le faisceau laser avec une hauteur de resserrement prédéterminé et avec une perte de puissance minimisée à un plan de référence (102) au voisinage duquel les signes (100) sont placés et atteints par le faisceau laser pour réfléchir ainsi depuis les signes de la lumière laser réfléchie, au moins une partie de retour de la lumière laser réfléchie s'éloignant des signes en revenant vers le système ;
(c) des moyens de balayage (24, 104, 19, 19b) destinés à balayer les signes (100) au cours d'un balayage les parcourant, ladite partie de retour de la lumière laser réfléchie ayant une intensité variable au fil du balayage ;
(d) des moyens capteurs (17) destinés à détecter l'intensité variable de la partie de retour de la lumière laser réfléchie sur un champ optique, et à générer un signal électrique représentatif des signes lus ;
(e) lesdits moyens de balayage agissant de façon à animer d'un mouvement de balayage au moins l'un dudit faisceau laser et dudit champ optique suivant une direction de balayage passant par les signes (100),
caractérisé en ce que
(f) ladite diode laser est une diode qui émet un faisceau laser à une longueur d'onde qui est au moins marginalement visible à l'oeil humain ;
(g) lesdits moyens capteurs (17) ont une ouverture de détecteur globalement rectangulaire (17a) pour minimiser l'interférence entre la lumière ambiante et ladite partie de retour de la lumière laser réfléchie, ladite ouverture (17a) du détecteur ayant son grand côté s'étendant le long de la direction de balayage, formant ainsi un champ optique globalement non circulaire ;
(h) un bloc optique (50) retenant au moins ladite diode laser (33), ladite lentille (32) et ledit diaphragme d'ouverture (45) est pourvu d'un moyen de réglage (52, 54, 56, 58) destiné à régler l'angle sous lequel le faisceau laser émerge du bloc optique (50), permettant ainsi le positionnement réglable du faisceau laser pour qu'il s'étende dans ledit champ optique non circulaire.

2. Système selon la revendication 1, dans lequel ledit moyen de réglage comporte au moins un élément fileté (56) mobile manuellement, passant avec du jeu à travers un radiateur thermique (31) de la diode et une partie arrière (54) du bloc optique (50), et étant vissé dans une partie avant (52) du bloc (50), ledit bloc comportant une articulation (58) formée entre lesdites parties arrière (54) et avant (52) du bloc (50), ladite partie arrière (54) retenant au moins ladite diode laser (33), ladite lentille (32) et ledit diaphragme à ouverture (45), et dans lequel ladite partie avant (52) est reliée fixement à une plaquette (16) à circuit.

3. Système selon la revendication 2, dans lequel le système comprend une partie de boîtier allongée (11) ayant une zone d'extrémité avant (11a) plus proche, et une zone d'extrémité arrière (11b) plus éloignée, des signes (100) ; et dans lequel la diode (33) est placée à la zone d'extrémité avant et émet le faisceau laser vers la zone d'extrémité arrière ; et dans lequel les moyens de balayage comprennent un miroir de balayage (19b) à la zone d'extrémité arrière, dirigeant ainsi le faisceau laser pour qu'il parcoure environ deux fois la longueur de la partie de boîtier à l'intérieur de la tête.

4. Système selon la revendication 1, et comportant en outre une plaquette à circuit imprimé s'étendant entre la diode laser (33), les moyens optiques, les moyens de balayage et les moyens capteurs, maintenant ainsi l'alignement optique entre ces parties.
